# EUROPÄISCHE PATENTANMELDUNG

(11) **EP 1 128 457 A2**
(43) Veröffentlichungstag der Anmeldung: **29.08.2001**
(21) Anmeldenummer: 01100626.9
(22) Anmeldetag: 11.01.2001
(51) Int. Cl.: H01M 10/34, H01M 4/24

(54) **Gasdicht verschlossener alkalischer Akkumulator in Form einer Knopfzelle**

(30) Priorität: 23.02.2000 DE 10008193
(71) Anmelder: VARTA Gerätebatterie GmbH, 30419 Hannover (DE)
(72) Erfinder: Kilb, Manfred, 73492 Rainau-Schwabsberg (DE); Schulz, German, 73479 Ellwangen (DE); Pytlik, Eduard, 73479 Ellwangen (DE); Koke, Thomas, 73434 Aalen (DE); Ilic, Dejan, dr., 73479 Ellwangen (DE)
(74) Vertreter: Kaiser, Dieter Ralf, Dipl.-Ing.

(57) **Zusammenfassung**

Bei einem gasdicht verschlossenen alkalischen Nickel-Metallhydrid-Akkumulator in Form einer Knopfzelle mit im Zellengehäuse angeordneten, durch einen Separator getrennten positiven und negativen Elektroden, besitzen beide Elektroden ein Träger- und Ableitergerüst, welches aus einem porösen Metallschaum oder Metallfilz besteht, wobei die positive Elektrode (4) auf der am Zellengehäuse (1) anliegenden Seite einen metallischen Bereich (8) aufweist, der frei von aktiver Masse ist. Dieser von aktiver Masse freie Bereich erstreckt sich über 5 bis 15%, vorzugsweise 10%, der Gesamtdicke der Elektrode. Insbesondere besitzt zumindest eine der Elektroden eine mittige Ausnehmung (9, 10), deren Volumen 5 bis 20%, vorzugsweise ca. 10% des Elektrodenvolumens beträgt.

## Beschreibung

Gegenstand der Erfindung ist ein gasdicht verschlossener alkalischer Akkumulator in Form einer Knopfzelle mit im Zellengehäuse angeordneten, durch einen Separator getrennten positiven und negativen Elektroden.

Das Gehäuse einer üblichen Knopfzelle wird von einem napfförmigen Unterteil und einem Deckel aus vernickeltem Stahlblech gebildet. Das Unterteil nimmt zunächst die positive Elektrode auf, dann folgt ein laugebeständiges Kunststoffmaterial als Separator, und darauf ist die negative Elektrode angeordnet. Die Elektroden und der Separator sind mit Elektrolyt getränkt. Zwischen negativer Elektrode und dem Deckel liegt eine Feder, die einen engen Kontakt der Elektroden mit dem Zellengefäß herstellt. Der Zellennapf und der Deckel sind durch eine Kunststoffdichtung voneinander isoliert. Durch Umbördeln und Festpressen des Napfrandes wird ein einwandfrei dichtender Verschluss erreicht.

Typische Knopfzellenelektroden sind Masseelektroden, die aus einer Trockenmischung bestehen, die zu Tabletten verpresst wird. Die fertigen Tabletten benötigen eine leitende äußere Armierung in Form eines Körbchens aus Nickeldrahtgewebe. Die Herstellung derartiger Masseelektroden ist daher aufwendig.

In der EP 658949 B1 ist daher bereits eine Knopfzelle beschrieben, bei der zumindest die positive Elektrode ein Träger- und Ableitergerüst besitzt, welches aus einem porösen Metallschaum oder Metallfilz besteht.

Die Verwendung eines Foam-Materials ermöglicht es, auf die Zusätze von Leitmitteln, wie Nickelpulver, zu verzichten, so dass sich höhere Kapazitäten erzielen lassen.

Insbesondere für den Fall der Nickel/Cadmium-Knopfzelle ist im Patent EP 658949 B1 vorgeschlagen, auch die negative Elektrode auf der Basis eines Foamträgermaterials herzustellen.

Der Erfindung liegt die Aufgabe zugrunde, Knopfzellen anzugeben, welche sich durch besonders hohe Belastbarkeit auszeichnen, deren Bauhöhe wesentlich verringert ist und deren Montage und Fertigung stark vereinfacht ist.

Diese Aufgabe wird erfindungsgemäß bei einer Knopfzelle der eingangs genannten Art durch die Merkmale des Anspruchs 1 gelöst. Weitere Ausgestaltungen der Erfindung sind den Unteransprüchen zu entnehmen.

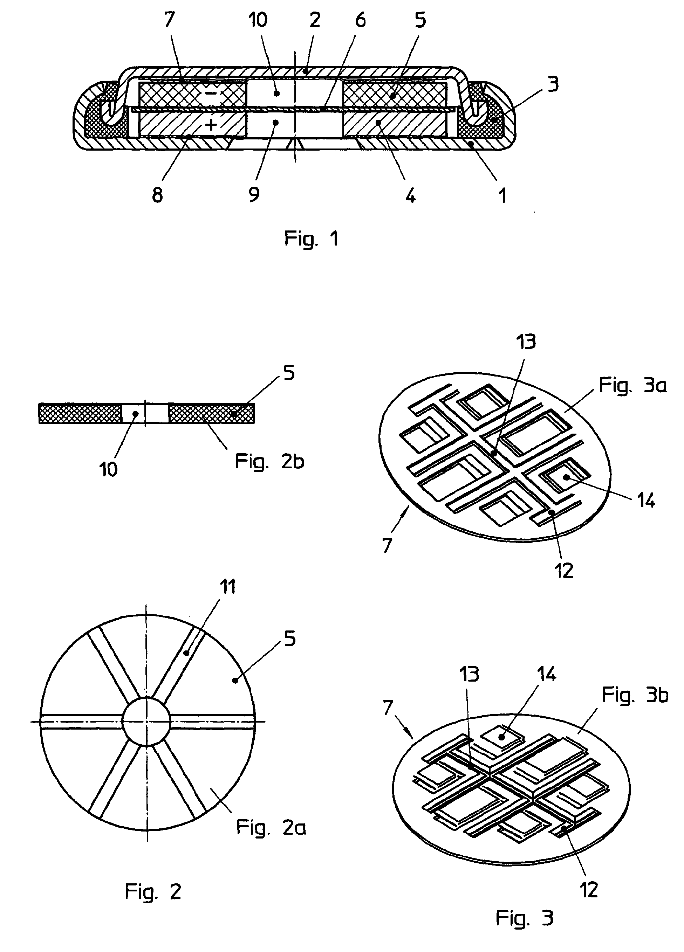

Im Folgenden ist der Gegenstand der Erfindung anhand der Figuren 1 bis 3 näher erläutert.

Figur 1 zeigt eine erfindungsgemäße Zelle im Querschnitt. Figur 2 zeigt eine in dieser Zelle verwendete negative Elektrode, in Figur 2a in Draufsicht und in Figur 2b im Querschnitt. Figur 3 zeigt eine zwischen Zellendeckel und Elektrodensatz vorgesehene flache Feder gemäß Figur 3a von oben und gemäß Figur 3b von unten.

Gemäß Figur 1 besteht die Knopfzelle in an sich bekannter Weise aus einem Zellennapf 1 und einem Zellendeckel 2, zwischen denen eine elektrisch isolierende Dichtung 3 angeordnet ist. Im Zellengehäuse befinden sich die positive Elektrode 4 und die negative Elektrode 5. Zwischen diesen ist der Separator 6 vorgesehen. Oberhalb der negativen Elektrode 5 ist in ebenfalls an sich bekannter Weise eine Feder 7 angeordnet, die einen Pressdruck auf den Elektrodensatz ausübt und damit für eine gute elektrische Anbindung der Elektroden an die Behälterteile sorgt.

Die positive Elektrode besitzt als aktive Masse ein Nickelhydroxidmaterial, während die negative Elektrode ein H₂-Speichermaterial als aktive Masse aufweist. Sowohl die positive als auch die negative Elektrode besitzen ein Nickelschaummaterial als Trägergerüst. Erfindungsgemäß ist das Nickelschaum-Trägergerüst der positiven Elektrode 4 so ausgestaltet, dass das Gerüst an der am Zellenbecher 1 anliegenden Seite frei von positiver aktiver Masse ist. Diese positive Elektrode wird derart hergestellt, dass ein gegebenenfalls auf ein bestimmtes Maß vorgepresster Nickelschaum einseitig mit einer Nickelhydroxidpaste imprägniert wird und zwar derart, dass in der zum Einbau in die Zelle bestimmten Elektrode ca. 5 bis 15%, vorzugsweise ca. 10% der Elektrodendicke in dem Bereich 8, in dem die Elektrode am Zellenbecher anliegt, von aktiver Masse frei sind.

Zur Herstellung der positiven Elektrode 4 wird ein üblicher Nickelschaum mit hoher Porosität verwendet, der auf eine bestimmte Dicke vorverdichtet ist und in den mittels einseitiger Pastierung eine wässrige Paste aus Nickelhydroxidpulver, gegebenenfalls mit weiteren metallischen Zusätzen, eingebracht wird. Als Zusätze kommen insbesondere Kobalt- oder Zinkverbindungen in Betracht. Das Nickelhydroxid sollte insbesondere ein Material mit sphärischer Korngestalt und hoher Festkörperdichte sein, wie es beispielsweise im Patent EP 694 981 B1 beschrieben ist. Nach dem Einbringen der Paste in das Foamgerüst wird das Band kalibriert und gegebenenfalls auf seine Enddicke verdichtet. Daraus werden dann Einzelelektroden ausgeschnitten, die zum Einbau in das Zellengehäuse bestimmt sind.

Die negative Elektrode 5 besitzt als Trägermaterial ebenfalls ein Metallschaumgerüst, in welches eine Wasserstoffspeicherlegierung einpastiert ist. Diese Wasserstoffspeicherlegierung füllt das Foamgerüst auf seiner ganzen Dicke aus. Sie ist entweder von einer Seite vollständig in das Foamgerüst imprägniert oder das Foamgerüst wurde von beiden Seiten pastiert.

Als H₂-Speichermaterial wurden insbesondere Materialien der Gattung AB₅ (LaNi₅, MmNi₅) mit weiteren zusätzlichen Elementen oder auch Materialien der Gattung AB₂ (Ti₂Ni, TiNi) verwendet.

Die positive Elektrode 4, die einen am Zellennapf 1 anliegenden Bereich 8 besitzt, der erfindungsgemäß frei von aktiver Masse ist, wird über diesen Bereich, der metallisch bleibt, elektrisch gut mit dem Zellennapf 1 kontaktiert.

Gemäß einer weiteren Ausgestaltung der Erfindung besitzt die positive Elektrode 4 eine mittige Ausnehmung 9. Diese mittige Ausnehmung, welche beliebige Form besitzen kann, vorzugsweise aber die Form eines Zylinders aufweist, dient einerseits einer Zentrierung und Halterung der Elektrode 4 beim Einbringen in den Zellennapf 1, andererseits ist ihr Volumen so bemessen, dass in diesen Hohlraum 9 beim Einbau der zum Tränken der Elektrode mit Elektrolyt notwendige Elektrolytvorrat eingebracht werden kann. Das Volumen dieses Hohlraums 9 beträgt ca. 5 bis 20% des Volumens der Elektrode, vorzugsweise liegt sein Volumen bei ca. 10% des Elektrodenvolumens.

Vorzugsweise besitzt die negative Elektrode 5 ebenfalls einen solchen Hohlraum 10, dessen Volumen in gleicher Weise bemessen ist.

Durch diese Ausgestaltung der Elektroden lässt sich die erfindungsgemäße Knopfzelle sehr einfach montieren. Zuerst wird der Zellendeckel 2 mit der Dichtung 3 montiert, die Feder 7 wird eingelegt und die negative Elektrode 5 wird zentriert eingebracht. Anschließend wird in den Hohlraum 10 die zum Tränken der Elektrode notwendige Elektrolytmenge eindosiert und der Separator 6 eingebracht. Schließlich wird zentriert mittels der Ausnehmung 9 die positive Elektrode 4 aufgebracht und auch in den Hohlraum 9 dieser Elektrode wird ein Elektrolytvorrat eingebracht. Die Elektroden und der Separator saugen den eingebrachten Elektrolytvorrat auf und es wird damit insbesondere gewährleistet, dass beim Zusammenbau kein Elektrolyt in den Bereich der Dichtung 3 gelangt, der später zu Undichtigkeiten der Zelle führen könnte. Schließlich wird der Zellennapf 1 übergestülpt und der Rand des Zellennapfes 1 wird über den Rand des Zellendeckels 2 unter Zwischenlage der Dichtung 3 umgebördelt.

Vorteilhaft ist es, in der negativen Elektrode 5 auf der Seite, die dem Zellendeckel zugeordnet ist, Vertiefungen 11 anzuordnen, wie sie beispielsweise in Figur 2 dargestellt sind, die sternförmig vom Hohlraum 10 aus nach außen verlaufen, und die für einen guten Gasaustausch und damit einen raschen Gasverzehr sorgen. Diese sternförmigen Vertiefungen 11 können eine Tiefe von beispielsweise ca. 0,05 bis 0,1 mm aufweisen. Die Elektroden selbst können durch die Verwendung von erfindungsgemäßem Schaummaterial sehr dünn gestaltet werden. Sie können insbesondere Dicken von nur ca. 0,3 bis 1 mm aufweisen. Die Vertiefungen besitzen eine Tiefe von 5 bis 15%, vorzugsweise ca. 10% der Elektrodendicke.

Oberhalb der negativen Elektrode 5 ist in üblicher Weise eine Feder 7 angeordnet, die in Figur 3 dargestellt ist, wobei die Figuren 3a und 3b die Feder von beiden Seiten zeigen. Erfindungsgemäß wird hier eine besonders flach gestaltete Feder 7 verwendet, welche aus einem dünnen Nickelblech besteht, das einerseits Sicken 12 und 13 aufweist, die die Stabilität des Materials erhöhen und andererseits eine Vielzahl von aus dem Material herausgebogenen flachen Zungen 14, die eine Federwirkung auf einen großen Teil der Oberfläche der negativen Elektrode 5 ausüben.

Durch die Verwendung von Foam-Material als Trägergerüst beider Elektroden ist es einerseits möglich, insbesondere sphärisches Nickelhydroxid als aktives Material der positiven Elektrode zu verwenden. Es entfallen damit aufwendige Imprägnier- und Tränkungsprozesse der Elektroden, so dass die Fertigung der Elektroden rationell automatisiert werden kann. Im Vergleich zu bekannten Technologien ergeben sich damit Kapazitäten, die ca. 30 bis 40% höher sind. Durch die besondere Ausgestaltung der positiven Elektrode, die eine gute elektrische Anbindung der Elektrode an das Zellengehäuse ergibt, wird die Belastbarkeit der Zellen deutlich erhöht. Die verwendeten Fertigungsprozesse in Form von Pastierverfahren bringen nur geringe Staubbelastungen und einen geringen Energieverbrauch mit sich. Gegenüber beispielsweise durch Walzverfahren hergestellten Elektroden besitzen die erfindungsgemäßen Foamelektroden eine hohe Stabilität, was ihre Verarbeitbarkeit bei der Zellenherstellung stark verbessert. Durch die Einbringung von zentralen Ausnehmungen wird eine Zentrierung der Elektroden beim Einbau und damit eine gleichmäßige Fertigung gewährleistet. Insbesondere ist es durch Verwendungen derartiger Elektroden möglich, außerordentlich dünne Zellen mit Dicken von 0,4 bis 2,6 mm Gesamthöhe aufzubauen, was mit konventionellen Elektroden nicht möglich ist.

In die in den Elektroden vorgesehenen Hohlräume kann bei der Montage der Elektrolyt eindosiert werden, so dass Verunreinigungen des Dichtungsbereichs der Zelle vermieden werden.

## Patentansprüche

1. Gasdicht verschlossener alkalischer Nickel-Metallhydrid-Akkumulator in Form einer Knopfzelle mit im Zellengehäuse angeordneten, durch einen Separator getrennten positiven und negativen Elektroden, dadurch gekennzeichnet, dass beide Elektroden ein Träger- und Ableitergerüst besitzen, welches aus einem porösen Metallschaum oder Metallfilz besteht und dass die positive Elektrode (4) auf der am Zellengehäuse (1) anliegenden Seite einen metallischen Bereich (8) aufweist, der frei von aktiver Masse ist.

2. Gasdicht verschlossener Nickel-Metallhydrid-Akkumulator nach Anspruch 1, dadurch gekennzeichnet, dass der von aktiver Masse freie Bereich (8) sich über 5 bis 15%, vorzugsweise 10%, der Gesamtdicke der Elektrode (4) erstreckt.

3. Gasdicht verschlossener Nickel-Metallhydrid-Akkumulator nach den Ansprüchen 1 oder 2, dadurch gekennzeichnet, dass zumindest eine der Elektroden (4, 5) eine mittige Ausnehmung (9, 10) besitzt, deren Volumen 5 bis 20%, vorzugsweise ca. 10% des Elektrodenvolumens beträgt.

4. Gasdicht verschlossener Nickel-Metallhydrid-Akkumulator nach Anspruch 1 oder 2, dadurch gekennzeichnet, dass beide Elektroden (4, 5) eine mittlere Ausnehmung (9, 10) besitzen, deren Volumen so bemessen ist, dass es die zur Tränkung der Elektroden notwendige Elektrolytmenge aufnehmen kann.

5. Gasdicht verschlossener Nickel-Metallhydrid-Akkumulator nach einem der Ansprüche 1 bis 4, dadurch gekennzeichnet, dass die negative Elektrode (5) auf der dem Zellendeckel (2) zugewandten Seite Vertiefungen (11) aufweist.

6. Gasdicht verschlossener Nickel-Metallhydrid-Akkumulator nach Anspruch 5, dadurch gekennzeichnet, dass die Vertiefungen (11) eine Tiefe von ca. 5 bis 15%, vorzugsweise ca. 10%, der Dicke der Elektrode besitzen.

7. Gasdicht verschlossener Nickel-Metallhydrid-Akkumulator nach einem oder mehreren der Ansprüche 1 bis 6, dadurch gekennzeichnet, dass zwischen negativer Elektrode (5) und Zellendeckel (2) eine flache Feder (7) angeordnet ist, die eine Vielzahl von aus dem Grundmaterial herausgebogenen flachen Federzungen (14) aufweist.
